# EUROPEAN PATENT SPECIFICATION

(11) **EP 2 040 104 B1**
(45) Date of publication and mention of the grant of the patent: **02.08.2017**
(21) Application number: 08016298.5
(22) Date of filing: 16.09.2008
(51) Int. Cl.: G02B 6/42, H05K 9/00

(54) **Optical transceiver module with improved noise reduction**
Optisches Sende-Empfangsmodul mit verbesserter Rauschreduzierung
Module émetteur-récepteur optique avec réduction ameliorée du bruit

(30) Priority: 18.09.2007 JP 2007240349
(43) Date of publication of application: 25.03.2009
(73) Proprietor: YAZAKI CORPORATION, Minato-ku Tokyo 108-8333 (JP)
(72) Inventor: Ozaki, Masahito, Gotemba-shi, Shizuoka (JP)
(74) Representative: Grünecker Patent- und Rechtsanwälte PartG mbB

(56) References cited:
- EP-A- 0 524 406
- EP-A- 0 580 289
- EP-A- 1 227 349
- JP-A- 2001 296 457
- JP-A- 2005 266 130
- JP-A- 2006 215 276
- US-A- 5 606 196
- US-A1- 2003 113 120
- US-B1- 6 206 582

## Description

### BACKGROUND OF THE INVENTION

### 1. Field of the invention

The present invention relates to an electronic component module in accordance with the preamble of independent claim 1. Such a device is known from JP2006215276.

### 2. Description of the related art

Hereafter, a description will be given of an optical module of a pigtail type disclosed in the following patent document 1. In Fig. 7A, an optical module 1 of a pigtail type is configured by including a light emitting/receiving portion 3 which is connected and fixed to an un-illustrated optical connector portion and a circuit board 2; a pair of optical fibers 4 for relay each having one end connected to the connector portion and the other end connected to the light emitting/receiving portion 3; and an optical fiber holding part 5 for holding these optical fibers 4 to ensure that an excessive force will not be applied to the light emitting/receiving portion 3.

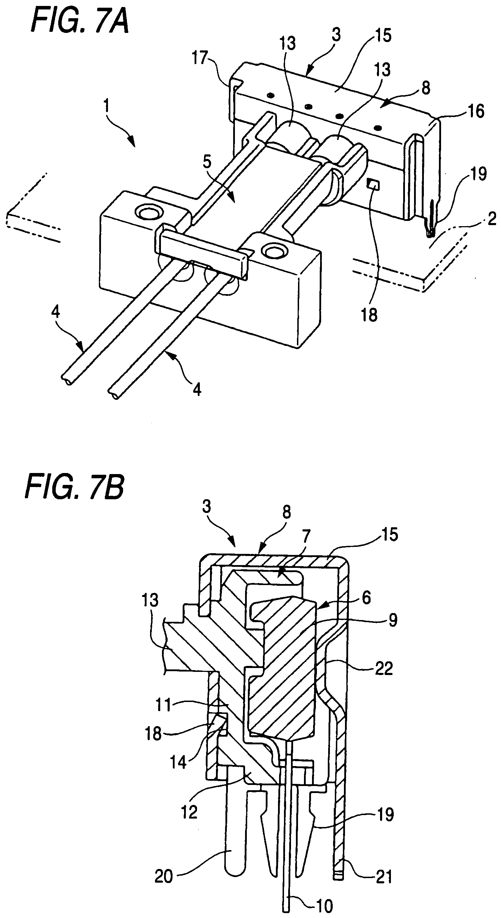

In Fig. 7B, the light emitting/receiving portion 3 is configured by including a light-emitting side fiber optic transceiver (FOT) having a light emitting element and a light-receiving side fiber optic transceiver (FOT) having a light receiving element (although only one is shown in the drawing, these will be referred to as the FOT 6); an FOT case 7 for fixing the FOT 6; and a shield case 8 for covering the FOT 6 and the FOT case 7 to provide a countermeasure against electromagnetic noise. The FOT 6 has a resin-molded package portion 9 and a plurality of lead frames 10. Although not particularly shown, four lead frames are provided as the lead frames 10, which are arranged horizontally in a row (eight lead frames are arranged horizontally in a row in the drawing due to two FOTs 6). The lead frames 10 are respectively inserted into connecting holes of the circuit board 2, are soldered thereat, and are connected to a desired circuit.

The FOT case 7 has a fixing portion 11 for fixing the package portion 9 of the FOT 6, as well as a lead frame-fixing portion 12 into which the lead frames 10 are inserted and fixed. It should be noted that the structure provided is such that, although not shown in detail, the aforementioned other end of the optical fiber 4 is fixed to a portion (optical fiber connecting tubular portion 13) indicated at reference numeral 13 in the FOT case 7, and this other end opposes the element of the FOT 6. A recessed retaining portion 14 is formed in the front surface of the fixing portion 11. The lead frame-fixing portion 12 is formed in a comb teeth shape.

As for the FOT 6, the respective lead frames 10 are fixed by the lead frame-fixing portion 12. In addition, the FOT 6 is adapted to be fixed in a state in which the upper portion and the both right and left sides of the package portion 9 are surrounded by the upper wall, the side walls, and the partition wall of the fixing portion 11.

The shield case 8 is formed in a box-like shape. The portion forming this box-like shape has such a structure that openings are respectively provided in upper and lower sides, and after the FOT case 7 fixing the FOT 6 is inserted into the interior from the upper opening, this assembly is covered with a cover portion 15. The cover portion 15 is formed continuously from an edge portion of the upper opening, and is structured such that if the cover portion 15 is subjected to bending, the upper opening can be covered (reference numeral 16 denotes a bent portion of the cover portion 15, and reference numeral 17 denotes a retaining portion for retaining the cover portion 15.) The FOT case 7 inserted into the shield case 8 is adapted to be retained as a small leaf spring-like retaining portion 18 of the shield case 8 is caught by the recessed retaining portion 14 of the FOT case 7.

Pin-like board connecting portions 19, 20, and 21 are formed on the aforementioned portion forming the box-like shape. These board connecting portions 19, 20, and 21 are formed at an edge portion of the lower opening, are inserted into the circuit board 2, are soldered thereat, and are thereby connected and fixed in the same way as the plurality of lead frames 10 of the FOT 6. A pair of pressing portions 22 (only one is shown) for holding the FOT 6 by pressing the rear surface of the package portion of the FOT 6 are formed on the portion forming the box-like shape.
Patent Document 1: JP-A-2005-91416

The FOT 6 is covered by the shield case 8 and is thereby provided with a countermeasure against electromagnetic noise, but the inventor of this application holds that there is leeway in amelioration for improving the noise performance.

### SUMMARY OF THE INVENTION

The invention has been devised in view of the above-described circumstances, and its object is to provide an optical module that is capable of improving the noise performance.

In accordance with an aspect of the invention for overcoming the above-described problem, there is provided an optical module according to the claim. According to the invention having the above-described characteristic feature, it is possible to produce an offset of magnetic fields by aligning positions of the ground pin of the lead frame and ground pin of the shield case.

According to the invention in accordance with the above-described aspect of the invention, it is possible to produce an offset of the magnetic fields. Accordingly, an advantage is offered in that it is possible to improve the noise performance over conventional optical modules.

### BRIEF DESCRIPTION OF THE DRAWINGS

Fig. 1 is an exploded perspective view of an optical connector illustrating an embodiment of an optical module in accordance with the invention;
Fig. 2 is a perspective view of the optical connector;
Fig. 3 is a diagram illustrating a state in which an FOT is mounted on an FOT case;
Fig. 4 is a rear view of a shield case;
Fig. 5 A and 5B are diagrams illustrating positions of ground pins of the FOT and ground pins of the shield case;
Figs. 6A and 6B is a graph illustrating the improvement of noise performance, in which Fig. 6A is a graph in accordance with the invention, and Fig. 6B is a graph in a case where the positions of the ground pins are not aligned and are offset toward the signal terminal side; and
Figs. 7A and 7B are diagrams of an optical module of a conventional example, in which Fig. 7A is a perspective view of a light emitting/receiving portion, and Fig. 7B is a cross-sectional view of the light emitting/receiving portion.

### DESCRIPTION OF THE PREFERRED EMBODIMENTS

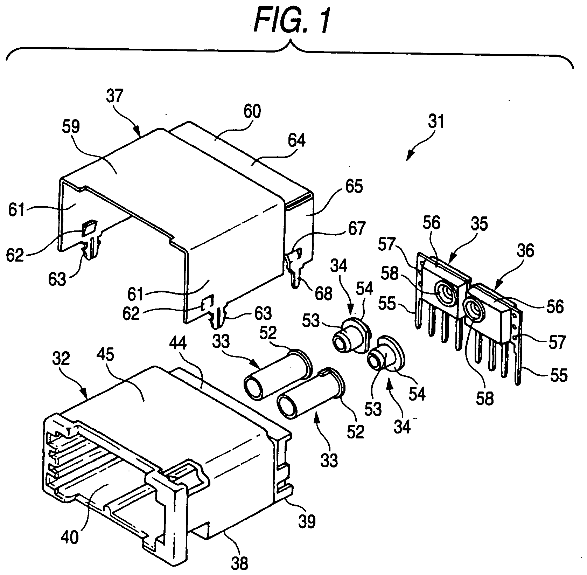

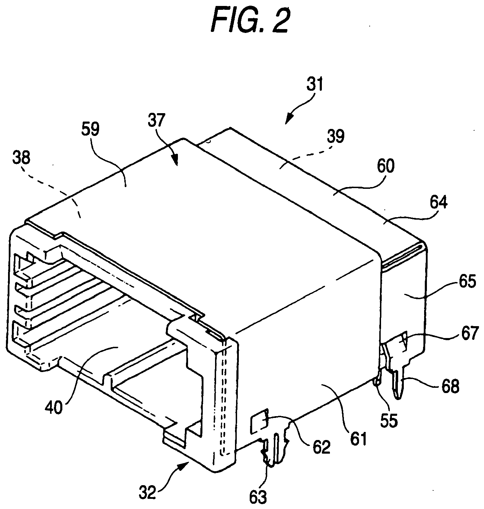

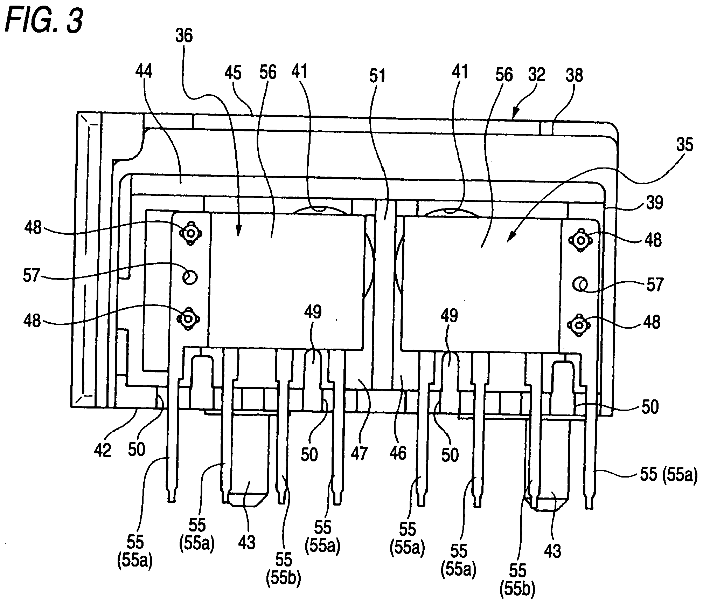

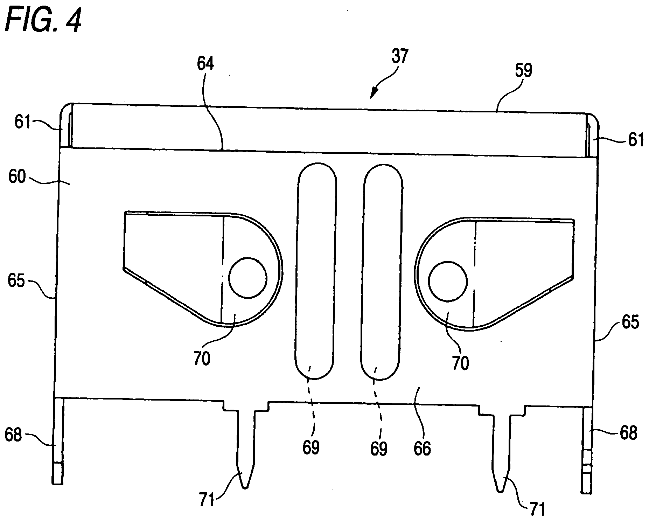

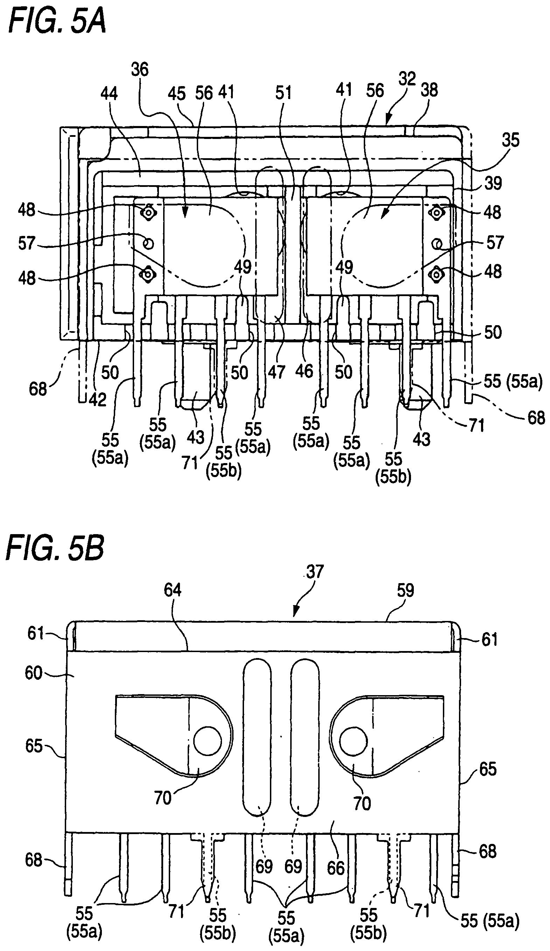

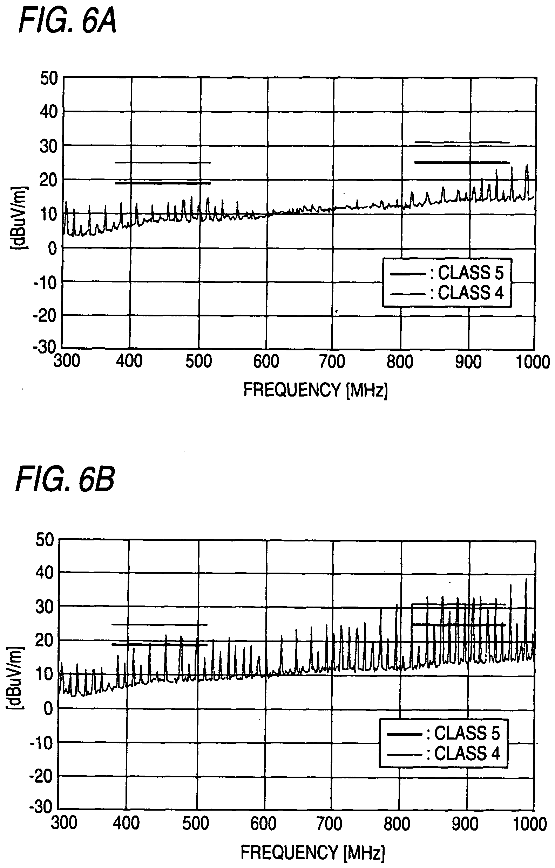

Hereafter, a description will be given with reference to the drawings. Fig. 1 is an exploded perspective view of an optical connector illustrating an embodiment of an optical module in accordance with the invention. In addition, Fig. 2 is a perspective view of the optical connector. Fig. 3 is a diagram illustrating a state in which a fiber optic transceiver (FOT) is mounted on an FOT case. Fig. 4 is a rear view of a shield case. Fig. 5 is a diagram illustrating positions of ground pins of the FOT and ground pins of the shield case. Figs. 6A and 6B are graphs illustrating the improvement of noise performance.

In Figs. 1 and 2, reference numeral 31 denotes an optical connector (optical module) used for optical communications in office automation (OS), factory automation (FA), vehicle-mounted equipment, and the like. The optical connector 31 is of the receptacle type and is configured by including a pair of sleeves 33, a pair of light guide members 34, a light-emitting side fiber optic transceiver (FOT) 35, a light-receiving side fiber optic transceiver (FOT) 36, and a shield case 37. The optical connector 31 has its characteristic feature in the positions of the ground pins, as will be described later, so as to be able to improve the noise performance over conventional optical modules. Hereafter, referring to Figs. 1 to 5, a description will be given of the aforementioned component members, and a description will be subsequently given of the improvement of the noise performance.

In Figs. 1 to 3, the connector housing 32 is a box-like member molded from a synthetic resin material having insulating properties, and includes a connector fitting portion 38 and an FOT accommodating portion 39. The connector-fitting portion 38 is formed in such a manner as to be able to be fitted to an optical connector (not shown) of a plug type when it is inserted into it. The connector-fitting portion 38 is disposed on the front side of the connector housing 32. A fitting space 40, into which the aforementioned optical connector (not shown) of the plug type is inserted, is formed in the connector-fitting portion 38.

A partition wall is formed between the connector-fitting portion 38 and the FOT accommodating portion 39. A pair of stepped through holes 41 are formed in this partition wall. The pair of stepped through holes 41 are penetratingly formed in accordance with the layout of a pair of ferrules (not shown) that are fitted to the optical connector (not shown) of the plug type.

Two positioning projections 43, which are used at the time of mounting on a circuit board (not shown), are formed in a lower wall 42 of the connector housing 32.

The FOT accommodating portion 39 is disposed on the rear side of the connector housing 32. An upper wall 44 of the FOT accommodating portion 39 is formed in a state of being lower than an upper wall 45 of the connector-fitting portion 38. A pair of FOT accommodating chambers 46 and 47 that accommodate the light-emitting side FOT 35 and the light-receiving side FOT 36 are formed in the FOT accommodating portion 39. The FOT accommodating chambers 46 and 47 are formed such that the light-emitting side FOT 35 and the light-receiving side FOT 36 can be accommodated by being arranged in a horizontally juxtaposed manner.

The stepped through holes 41 are respectively formed juxtaposedly in the FOT accommodating chambers 46 and 47. The fitting space 40 and each of the FOT accommodating chambers 46 and 47 are formed so as to communicate with each other through the stepped through hole 41. Pluralities of FOT fixing projections 48 and FOT supporting projections 49 are formed in each of these FOT accommodating chambers 46 and 47. Also, a plurality of lead frame leading-out ports 50 are formed in each of the FOT accommodating chambers 46 and 47.

An FOT partition wall 51 is formed between the FOT accommodating chambers 46 and 47. The FOT partition wall 51 is a wall for preventing cross talk, and is formed in such a manner as to project between the light-emitting side FOT 35 and the light-receiving side FOT 36 respectively accommodated in the FOT accommodating chambers 46 and 47.

In Fig. 1, the sleeve 33 is a metallic hollow cylinder, and a flange 52 functioning as a stopper is formed at one end thereof. The main body of the sleeve 33 is formed so as to be inserted into the stepped through hole 41 (see Fig. 3) of the connector housing 32. The sleeve 33 is adapted to be inserted into the stepped through hole 41 from the side of each of the FOT accommodating chambers 46 and 47 of the connector housing 32. As for the sleeve 33 inserted in the stepped through hole 41, a portion ranging from its other end to its intermediate portion is adapted to project into the fitting space 40 of the connector housing 32.

In Fig. 1, the light guide member 34 is molded from a transparent synthetic resin material having light transmissivity. The light guide member 34 has an insertion holding portion 53 with a main light guide portion formed therein. The main light guide portion is formed such that one end thereof has the function of a convex lens. Further, the main light guide portion is formed in the shape of a so-called truncated cone in which its diameter is gradually reduced from one end toward the other. The light guide member 34 used for the light-emitting side FOT 35 is adapted such that the light from the light emitting side FOT 35 is focused on an end portion of a ferrule (not shown) by the main light guide portion. Meanwhile, the light guide member 34 used for the light-receiving side FOT 36 is adapted such that the light from the end portion of the aforementioned ferrule (not shown) is focused on the light-receiving side FOT 36 by the main light guide portion.

The insertion-holding portion 53 is formed in a substantially tubular shape so as to surround the main light guide portion. The insertion-holding portion 53 is formed so as to be inserted into the sleeve 33. A flange 54 functioning as a stopper is formed at an intermediate portion of the insertion holding portion 53. The flange 54 is formed so as to abut against a stepped portion of the stepped through hole 41 (see Fig. 3) of the connector housing 32.

In Figs. 1 and 3, the light-emitting side FOT 35 has a plurality of lead frames 55 which are electrically connected to a circuit of the circuit board (not shown), a light emitting element (an un-illustrated optical element such as an LD or an LED), and a package portion 56 formed by resin molding. The light-emitting element is mounted on one of the plurality of lead frames 55. The light emitting element and the remaining lead frames 55 are electrically connected. A plurality of fixing holes 57 are formed in the outermost lead frame 55 (rightmost in the case of Fig. 3).

By using a synthetic resin material having light transmissivity, the package portion 56 is molded. The package portion 56 has the function of protecting the light emitting element and electrical connecting portions. A window 58 facing the light-emitting element is formed in this package portion 56.

The light-emitting side FOT 35 is adapted such that when it is accommodated in the FOT accommodating chamber 46, the FOT fixing projections are press fitted into the fixing holes 57 so as to prevent the light-emitting side FOT 35 from coming off the FOT accommodating chamber 46. In addition, the light-emitting side FOT 35 is adapted such that when the light guide member 34 is inserted into the window 58, the light emitting element and the main light guide portion of the light guide member 34 are opposed to each other.

The light-receiving side FOT 36 has a plurality of lead frames 55 that are electrically connected to the circuit of the circuit board (not shown), a light receiving element (an un-illustrated optical element such as a PD), and a package portion 56 formed by resin molding. The light-receiving element is mounted on one of the plurality of lead frames 55. The light receiving element and the remaining lead frames 55 are electrically connected. A plurality of fixing holes 57 are formed in the outermost lead frame 55 (leftmost in the case of Fig. 3). The light receiving element and electrical connecting portions are protected by the package portion 56.

The light- receiving side FOT 36 is adapted such that when it is accommodated in the FOT accommodating chamber 47, the FOT fixing projections are press fitted into the fixing holes 57 so as to prevent the light-receiving side FOT 36 from coming off the FOT accommodating chamber 47. In addition, the light- receiving side FOT 36 is adapted such that when the light guide member 34 is inserted into the window 58, the light receiving element and the main light guide portion of the light guide member 34 are opposed to each other.

In Fig. 3, concerning the plurality of lead frames 55 of the light-emitting side FOT 35 and the light-receiving side FOT 36, it is assumed that reference numeral 55a denotes a lead frame functioning as a signal terminal pin, and that reference numeral 55b denotes a lead frame functioning as a ground pin. There are three lead frames 55a which function as the signal terminal pins, and there is one lead frame 55b which functions as the ground pin. Here, it is assumed that the lead frame 55b which functions as the ground pin of the light-emitting side FOT 35 is disposed at the second position from the right. In addition, it is assumed that the lead frame 55b which functions as the ground pin of the light-receiving side FOT 36 is disposed at the third position from the left. (The positions where these lead frames are disposed are only examples.)

In Figs. 1 and 4, the shield case 37 is formed by press working a metallic thin plate having electrical conductivity. The shield case 37 has a housing shield portion 59 and an FOT shield portion 60. The housing shield portion 59 and the FOT shield portion 60 are formed integrally. The housing shield portion 59 is formed so as to be able to provide a countermeasure against electromagnetic noise for the connector-fitting portion 38 of the connector housing 32 by covering the connector-fitting portion 38.

A resilient retaining piece 62 and a ground pin 63 are formed on each side wall 61 of the housing shield portion 59. The resilient retaining piece 62 is formed to fix the shield case 37. The ground pin 63 is formed to provide grounding by being inserted into a fixing hole of the circuit board (not shown).

The FOT shield portion 60 is formed so as to be able to provide a countermeasure against electromagnetic noise for the light-emitting side FOT 35 and the light-receiving side FOT 36 accommodated in the FOT accommodating chambers 46 and 47 by covering them. The FOT shield portion 60 has an upper wall 64, both sidewalls 65, and a rear wall 66. The upper wall 64 is formed flatly. A resilient retaining piece 67 and a ground pin 68 similar to those of the housing shield portion 59 are formed on each sidewall 61 of the sidewall 65. The rear wall 66 is a wall opposing the back surfaces the light-emitting side FOT 35 and the light-receiving side FOT 36. Formed on the rear wall 66 are a pair of protruding portions 69, between which a leading end of the FOT partition wall 51 is inserted, as well as a pair of FOT pressing springs 70 for pressing against the back surfaces of the light-emitting side FOT 35 and the light-receiving side FOT 36.

Two ground pins 71 are projectingly formed at a lower end of such a rear wall 66. The two ground pins 71 of the rear wall 66 are formed to provide grounding by being respectively inserted into fixing holes of the circuit board (not shown).

In Fig. 5A and 5B, one of the two ground pins 71 of the rear wall 66 is formed by being disposed in accordance with the position of the lead frame 55b functioning as the ground pin of the light-emitting side FOT 35. Also, the other one of the two ground pins 71 of the rear wall 66 is formed by being disposed in accordance with the position of the lead frame 55b functioning as the ground pin of the light-receiving side FOT 36. The ground pins 71 are disposed so as to be respectively positioned immediately behind the lead frames 55b. The ground pins 71 are formed slightly more widely than the lead frames 55b.

In the above-described configuration, when the optical connector 31 assembled in a predetermined sequence is fixed on the circuit board (not shown), and is electrically connected, the ground pins 71 formed on the FOT shield portion 60 of the shield case 37 are respectively positioned immediately behind the lead frame 55b functioning as the ground pin of the light-emitting side FOT 35 and immediately behind the lead frame 55b functioning as the ground pin of the light-receiving side FOT 36.

In the invention, an offset of magnetic fields is produced by aligning the positions of the lead frames 55b functioning as the ground pins of the light-emitting side FOT 35 and the light-receiving side FOT 36 and the positions of the ground pins 71 of the shield case 37.

Fig. 6A is a graph in accordance with the invention, and Fig. 6B is a graph in a case where the positions of the ground pins are not aligned and are offset toward the signal terminal side. As can be appreciated from Figs. 6A and 6B, the invention is capable of improving the noise performance over conventional optical modules.

Concerning the invention, a brief description will be given of the principle of the action of offset of magnetic fields.

When electricity flows across a conductor, an electric field is invariably generated clockwise with respect to the flowing direction. There is a characteristic that when electricity flows in the same direction across conductors arranged in parallel, electric fields offset each other. If an electric field dissipates between two GNDs, i.e., between two ground pins (between the lead frame 55b and the ground pin 71), electromagnetic waves are not generated. Accordingly, this leads to noise reduction.

In a preferred form, the lead frame 55b and the ground pin 71 are disposed in a completely overlapping manner, as shown in Fig. 5. (However, the invention is not limited to the completely overlapping state. For example, if the ground pin 71 is disposed by being slightly offset to the rightward or leftward direction, there are some effects.)

It should be noted that since the potential differs between the ground pin 71 and the lead frame 55a functioning as the signal terminal pin, it is apprehended that an antenna is thereby formed. In this embodiment, the position of the ground pin 71 is offset in the rearward direction so as to be spaced apart, thereby reducing the antenna effect. Accordingly, the amount of electromagnetic waves generated is minimized.

Although, in the above description, the optical connector 31 of the receptacle type has been cited as an example, in a case where the invention is applied to an optical module of a pigtail type, the ground pin of the shield case may, of course, be positioned immediately behind the lead frame functioning as the ground pin of the FOT in the same way as in the above description, and the ground pin of the shield case may be positioned immediately in front of the lead frame of the FOT.

## Claims

1. An optical module (31), comprising:
a fiber optic transceiver (FOT) (35; 36) having an optical element and a plurality of pin-like lead frames (55);a connector housing (32), which includes a connector fitting portion (38) disposed on the front side of the connector housing (32) and a FOT accommodation portion (39); and a shield case (37) formed of an electrically conductive metallic plate;
wherein the shield case (37) has a housing shield portion (59) and a FOT shield portion (60), which are formed integrally, and
wherein the housing shield portion (59) is configured to cover the connector fitting portion (38) and the FOT shield portion is configured to cover the FOT (35; 36), and
the housing shield portion (59) has a resilient retaining piece (62) and a ground pin (63) which are formed on each side wall (61) of the housing shield portion (59) and,
a ground pin (71) of the shield case (37) is projectingly formed at a lower end of a rear wall (66) of the FOT shield portion (60), the rear wall opposing the back surfaces of the FOT (35;36)
**characterized in that**
in a rear view of the shield case, the ground pin (71) of the shield case (37) is positioned immediately in front of or immediately behind a lead frame (55b) that functions as a ground pin among the plurality of lead frames (55).

## Patentansprüche

1. Ein optisches Modul (31), umfassend:
einen Lichtwellenleiter-Sendeempfänger (Fiber Optic Transeiver bzw. FOT) (35; 36), der ein optisches Element und eine Vielzahl von pinförmigen Leiterrahmen (55) hat; ein Anschlussgehäuse (32), welches einen Anschlussmontage-Abschnitt (38) umfasst, der an der Frontseite des Anschlussgehäuses (32) angeordnet ist und einen FOT Unterbringungsabschnitt (39); und ein Abschirmgehäuse (37), das aus einen elektrisch leitender Metallplatte gebildet ist;
wobei das Abschirmgehäuse (37) einen Gehäuseabschirm-Abschnitt (59) und einen FOT Abschirmabschnitt (60) hat, welche integral gebildet sind, und
wobei der Gehäuseabschirm-Abschnitt (59) konfiguriert ist den Anschlussmontage-Abschnitt (38) abzudecken und der FOT Abschirmabschnitt ist konfiguriert den FOT (35; 36) abzudecken, und
der Gehäuseaschirm-Abschnitt (59) hat ein federndes rückhaltendes Teil (62) und einen Erdungsstift (63), welche auf jeder Seitenwand (61) des Gehäuseabschirm-Abschnittes (59) gebildet sind und,
einen Erdungsstift (71) des Abschirmgehäuses (37), der herausragend an einem unteren Ende einer Rückwand (66) des FOT Abschirmabschnitts (60) gebildet ist, die Rückwand ist der Rückseiten des FOTs (35; 36) gegenüberliegend,
**dadurch gekennzeichnet, dass**
in einer Rückansicht des Abschirmgehäuses, der Erdungsstift (71) des Abschirmgehäuses (37) direkt vor oder direkt hinter einem Leiterrahmen (55b) positioniert ist, der als ein Erdungsstift von der Vielzahl der Leiterrahmen (55) funktioniert.

## Revendications

1. Module optique (31), comprenant:
un émetteur-récepteur à fibre optique (FOT) (35; 36) ayant un élément optique et une pluralité de cadres de connexion (55) en forme de broche; un boîtier de connecteur (32), qui inclut une partie de raccord de connexion (38) disposée sur le côté avant du boîtier de connecteur (32) et une partie d'hébergement du FOT (39); et un boîtier de protection (37) formé d'une plaque métallique électriquement conductrice;
dans lequel le boîtier de protection (37) présente une partie de protection de boîtier (59) et une partie de protection du FOT (60) qui sont formées d'une seule pièce, et
dans lequel la partie de protection de boîtier (59) est configurée pour recouvrir la partie de montage de connecteur (38) et la partie de protection du FOT est configurée pour recouvrir le FOT (35; 36) et
la partie de protection de boîtier (59) comporte une pièce de retenue élastique (62) et une broche de masse (63) qui sont formées sur chaque paroi latérale (61) de la partie de protection de boîtier (59) et
une broche de masse (71) du boîtier de protection (37) est formée en saillie à une extrémité inférieure d'une paroi arrière (66) de la partie de protection du FOT (60), la paroi arrière opposée aux surfaces arrière du FOT (35; 36)
**caractérisé en ce que**
dans une vue arrière du boîtier de protection, la broche de masse (71) du boîtier de protection (37) est positionnée immédiatement en avant ou immédiatement derrière un cadre de conducteur (55b) qui fonctionne comme une broche de masse parmi la pluralité de cadres de conducteur (55).
